# EUROPÄISCHE PATENTSCHRIFT

(11) **EP 2 546 942 B1**
(45) Veröffentlichungstag und Bekanntmachung des Hinweises auf die Patenterteilung: **27.01.2021**
(21) Anmeldenummer: 12167706.6
(22) Anmeldetag: 11.05.2012
(51) Int. Cl.: H02H 1/00, H01H 71/04, H01H 83/20, H01R 103/00, H02H 3/04, H02H 3/093, H02H 3/10, H01H 73/14

(54) **Rücksetzen eines Störlichtbogenschutzgeräts**
Resetting of an arc fault protection device
Réinitialisation d'un appareil de protection contre les arcs de lumière parasite

(30) Priorität: 28.06.2011 DE 102011078239
(43) Veröffentlichungstag der Anmeldung: 16.01.2013
(73) Patentinhaber: Siemens Aktiengesellschaft, 80333 München (DE)
(72) Erfinder: Hueber, Alexander, 84085 Niederleierndorf (DE); Martel, Jean-Mary, 93105 Tegernheim (DE)

(56) Entgegenhaltungen:
- WO-A2-01/15183
- US-A- 4 969 063
- US-A1- 2006 097 829
- US-A1- 2009 198 459
- US-A1- 2010 085 206
- US-A1- 2011 147 178
- US-B1- 6 720 872

## Beschreibung

Die vorliegende Erfindung betrifft ein Störlichtbogenschutzgerät mit einer Detektionseinrichtung zum Detektieren eines Störlichtbogens und zum automatischen Versetzen des Störlichtbogenschutzgeräts von einem Betriebszustand in einen Störungszustand, wenn ein Störlichtbogen detektiert ist, und einer Bedieneinrichtung zum manuellen Einschalten und Ausschalten des Störlichtbogenschutzgeräts. Darüber hinaus betrifft die vorliegende Erfindung ein entsprechendes Verfahren zum Rücksetzen eines Störlichtbogenschutzgeräts.

Störlichtbogenschutzgeräte (AFDD = Arc Fault Detection Devices) sind Schutzgeräte, die serielle und parallele Störlichtbögen in einer elektrischen Nieder-Volt-Installationsanlage erkennen und reduzieren sollen. Diese Geräte überwachen hochfrequente Störanteile, die Leiterspannung und den Laststrom mithilfe komplexer analoger Schaltungen und/oder mittels Signalprozessoren. Da die Elektronik dieser Geräte Zugang zu wertvollen Informationen, wie den Strom und die Spannung, besitzt, können zusätzliche Leistungsmerkmale wie der Schutz gegen Überstrom, Kurzschluss, Überspannung und Reststrom mithilfe dieser Geräte ebenfalls realisiert werden.

Im Falle einer elektrischen Störung kann das Störlichtbogenschutzgerät auslösen, und es ist dann für den Bediener hilfreich, wenn er den Grund der Störung erfährt, um etwaige Fehler zu beseitigen oder Reparaturmaßnahmen einzuleiten. Die meisten Störlichtbogenschutzgeräte besitzen daher eine Anzeige (LED), die die Art der Störung anzeigt, die beim letzten Auslösen ausschlaggebend war.

Nachdem eine Störung beseitigt worden ist, sollte die Information über das letzte Auslösen gelöscht werden. Wenn beispielsweise der Störungsspeicher nicht gelöscht worden ist, und jemand das Störlichtbogenschutzgerät manuell ausschaltet, wird die nächste Person, die das Gerät einschalten wird, fälschlicherweise denken, dass das Gerät in Folge einer elektrischen Störung (die nicht behoben ist) ausgelöst hat.

Das US-Patent US 6720872B1 beschreibt einen Störlichtbogenschutzschalter beziehungsweise einen Fehlerstromschutzschalter für einen Stromkreis, der eine Leistungsklemme und Lastanschluss aufweist. Trennbare elektrische Kontakte sind zwischen der Leistungsklemme und dem Lastanschluss angeordnet. Der Störlichtbogenschutzschalter weist einen Betriebszustand und einen Auslösemechanismus auf. Der Auslösemechanismus arbeitet mit dem Betriebszustand zusammen. Der Störlichtbogenschutzschalter ist vornehmlich dazu ausgebildet, Fehlerströme beziehungsweise Störlichtbögen zu detektieren. Es wird vorzugsweise getestet, ob der Störlichtbogenschutzschalter oder Fehlerstromschutzschalter Störungszustände erkennen. Im Falle eines Tests wird der Betriebszustand wieder hergestellt, in dem Test und Reset-Knöpfe sequentiell aktiviert werden.

Die Druckschrift US 2009/0198459A1 trifft ein elektrisches Gerät zur Störungserkennung zum Einsatz in einem Zweig eines Stromkreises. Dazu kommen verschiedenartige elektrische Sensoren zum Einsatz. Die elektrische Störungserkennung weist unter anderem einen Netzstromsensor, einen Hochfrequenzsensor, einen Differenzial-Wirbelstromgeber sowie einen Fehlerstromsensor auf. Eine Signalverarbeitungseinheit empfängt die Signale, die vom Netzstromsensor, dem Hochfrequenzsensor den Wirbelstromgeber sowie den Fehlerstromsensor ausgegeben werden. Daraus wird ein Signal betreffend des Laststroms erzeugt. Das ausgegebene Signal wird erstellt und mit Verarbeitungsressourcen verarbeitet. Mit Hilfe der Verarbeitungsressourcen können Beispielsweise Zeit- Stromstärkekurven gewonnen werden, die eine Vielzahl von Bereichen definieren, in welchen eine Störung ausgelöst wurde. Aus diesen Daten kann eine Stromstärke ermittelt werden, bei der das Auslösen wahrscheinlich ist beziehungsweise nicht. Die so gewonnen Strom beziehungsweise Zeitdaten können für weiter Analysen zum Einsatz kommen.

Um eine derartige Situation zu vermeiden, muss eine Rücksetzeinrichtung oder -Interface dem Nutzer zur Verfügung gestellt werden. Eine Betätigung dieser Einrichtung wird dann den Störungsspeicher löschen.

Zusätzliche Bedienmittel wie ein Druckknopf sowie drahtgebundene oder drahtlose Kommunikationseinrichtungen zum Rücksetzen bedeuten jedoch zusätzliche Kosten und Platzbedarf.

Auf dem europäischen Markt gibt es bislang kein Störlichtbogenschutzgerät entsprechend der IEC-Norm. Störlichtbogenschutzgeräte sind jedoch auf dem amerikanischen Markt entsprechend der UL-Norm verfügbar. Ein solches, von der Anmelderin stammendes Gerät besitzt eine LED-Anzeige für Störungshinweise. Das Rücksetzen erfolgt dadurch, dass ein Testknopf gedrückt, und das Gerät angeschaltet wird. Besitzt ein Störlichtbogenschutzgerät diesen Testknopf nicht, kann diese Technik nicht angewandt werden.

Die Aufgabe der vorliegenden Erfindung besteht somit darin, ein Störlichtbogenschutzgerät bereitzustellen, das ohne teure Zusatzmaßnahmen von einem Störungszustand in einen Betriebszustand rückgesetzt werden kann. Darüber hinaus soll ein entsprechendes Verfahren zum Rücksetzen eines Störlichtbogenschutzgeräts bereitgestellt werden.

Erfindungsgemäß wird diese Aufgabe gelöst durch ein Störlichtbogenschutzgerät mit
- zwei Kontakten, die in einem Störungszustand elektrisch voneinander getrennt und in einem Betriebszustand elektrisch kurzgeschlossen sind,
- einer Detektionseinrichtung zum Detektieren eines Störlichtbogens und zum automatischen Versetzen des Störlichtbogenschutzgeräts von einem Betriebszustand in einen Störungszustand, wenn ein Störlichtbogen detektiert ist, und
- einer Bedieneinrichtung zum manuellen Einschalten und Ausschalten des Störlichtbogenschutzgeräts,
- einer Rücksetzeinrichtung zum Erfassen einer zeitlichen Bedienungsabfolge einer manuellen Bedienung der Bedienungseinrichtung und zum Rücksetzen des Störlichtbogenschutzgeräts von dem Störungszustand in den Betriebszustand in Abhängigkeit von der erfassten Bedienungsabfolge,
- wobei das Störlichtbogenschutzgerät durch eine zweite Bedienungsabfolge rücksetzbar ist, welche durch ein Einschalten, ein Ausschalten in einem vorgegebenen Zeitfenster nach dem Einschalten und einem anschließenden erneuten Einschalten jeweils durch die Bedienungseinrichtung charakterisiert ist.

Darüber hinaus wird erfindungsgemäß bereitgestellt ein Verfahren zum Rücksetzen eines Störlichtbogenschutzgeräts durch
- Detektieren eines Störlichtbogens durch das Störlichtbogenschutzgerät mit zwei Kontakten, die in einem Störungszustand elektrisch voneinander getrennt und in einem Betriebszustand elektrisch kurzgeschlossen sind,
- automatischen Versetzen des Störlichtbogenschutzgeräts von einem Betriebszustand in einen Störungszustand, wenn ein Störlichtbogen detektiert wird, und
- manuelles Einschalten und Ausschalten des Störlichtbogenschutzgeräts,
- Erfassen einer zeitlichen Bedienungsabfolge einer manuellen Bedienung des Störlichtbogenschutzgeräts und
- Rücksetzen des Störlichtbogenschutzgeräts von dem Störungszustand in den Betriebszustand in Abhängigkeit von der erfassten Bedienungsabfolge, wobei
- wobei das Störlichtbogenschutzgerät durch eine zweite Bedienungsabfolge rücksetzbar ist, welche durch ein Einschalten, ein Ausschalten in einem vorgegebenen Zeitfenster nach dem Einschalten und einem anschließenden erneuten Einschalten jeweils durch die Bedienungseinrichtung charakterisiert ist.

In vorteilhafter Weise erfolgt also das Rücksetzen des Störlichtbogenschutzgeräts durch ein Erfassen und Auswerten einer speziellen zeitlichen Bedienungsabfolge eines Bedienelements des Störlichtbogenschutzgeräts. Dadurch muss für die Rücksetzfunktion nicht ein eigenes Bedienelement bereitgestellt werden. Vielmehr wird eine spezielle Art der Betätigung der Bedieneinrichtung genutzt, um eine Bedienung zu erreichen. Es wird also die zeitliche Abfolge von mehreren, ggf. unterschiedlichen Bedienaktionen als Schaltinformation verwendet.

Vorzugsweise besitzt das Störlichtbogenschutzgerät eine Anzeigeeinrichtung zum Anzeigen, ob sich das Störlichtbogenschutzgerät im Störungszustand oder im Betriebszustand befindet. Damit kann der Bediener sofort erkennen, in welchem Zustand sich das Störlichtbogenschutzgerät befindet.

Das Störlichtbogenschutzgerät weist zwei Kontakte auf, die in dem Störungszustand elektrisch voneinander getrennt und in dem Betriebszustand elektrisch kurzgeschlossen sind. Damit kann in einfacher Weise die Schutzfunktion realisiert werden, um auftretende Störlichtbögen abzubauen.

Vorteilhafterweise besitzt die Detektionseinrichtung einen nicht-flüchtigen Speicher, mit dem gewährleistet ist, dass sich das Störlichtbogenschutzgerät im Störungszustand nach einer ersten Bedienungsabfolge, die durch ein einziges Ausschalten, bei der das Störlichtbogenschutzgerät (1) automatisch von dem Betriebszustand (I, VIII) in den Störungszustand (II bis VII) versetzt wurde, und ein einziges Wiedereinschalten charakterisiert ist, nach wie vor im Störungszustand befindet. Damit ist das Störlichtbogenschutzgerät in der Lage, die Information über die Störung auch nach einem Ausschalten weiterzugeben.

Das Störlichtbogenschutzgerät ist durch eine zweite Bedienungsabfolge rücksetzbar, welche durch ein Einschalten, ein Ausschalten in einem vorgegebenen Zeitfenster nach dem Einschalten und einem anschließenden erneuten Einschalten jeweils durch die Bedieneinrichtung charakterisiert ist. Die Anweisung des Bedieners, das Störlichtbogenschutzgerät zurückzusetzen, wird also in eine Abfolge von Ein- und Ausschaltvorgängen mit zeitlicher Überwachung kodiert. Hierzu sind auch beliebige andere Kodierungen, insbesondere auch ein mehrfaches Einschalten und Ausschalten in vorgegebenen gleichen oder verschiedenen Zeitfenstern denkbar.

Das oben vorgegebene Zeitfenster kann insbesondere zwischen 2s und 3s nach dem Einschalten liegen. Das Zeitfenster kann natürlich auch länger als 1s sein oder zu einem anderen Zeitpunkt beginnen.

Das für das Rücksetzen oben genannte erneute Einschalten liegt gemäß einem Ausführungsbeispiel mindestens 1s nach dem Ausschalten. Auch diese Zeitdauer kann größer oder kleiner gewählt werden.

Günstigerweise wird mit der Anzeigeeinrichtung das oben genannte Zeitfenster angezeigt. Im einfachsten Fall wird durch eine einfache Leuchtanzeige (LED) angezeigt, ob sich das Gerät zum aktuellen Zeitpunkt in dem Zeitfenster befindet oder nicht. Mit dieser Anzeigehilfe kann der Bediener seine Bedienaktion zuverlässig und sicher ausführen.

Entsprechend einem Ausführungsbeispiel wird in dem nicht-flüchtigen Speicher ein Flag gesetzt, wenn das Ausschalten in dem Zeitfenster erfolgt, und das Flag wird beim erneuten Einschalten von der Rücksetzeinrichtung verarbeitet. Der Zustand des Flag (gesetzt oder nicht gesetzt) stellt die Information bereit, ob die Bedieneinrichtung in dem vorgegebenen Zeitfenster bedient worden ist, und der nicht flüchtige Speicher gewährleistet, dass diese Information auch nach einem Ausschalten des Störlichtbogenschutzgeräts weiter für die Rücksetzeinrichtung zur Verfügung steht.

In einer Ausgestaltung besitzt die Bedieneinrichtung ein Bedienelement, das zum Einschalten in eine erste Stellung, zum Ausschalten in eine zweite Stellung und zum Realisieren einer Bedienungsabfolge für das Rücksetzen des Störlichtbogenschutzgeräts auch in eine definierte Mittelstellung zwischen der ersten und der zweiten Stellung bewegbar ist. Durch eine derartige Mittelstellung muss kein zusätzliches Bedien- bzw. Schaltelement für das Rücksetzen vorgesehen werden und die Komplexität der Zeitabfolge von Bedienungen der Bedieneinrichtung kann gegenüber dem Fall von nur zwei Schaltstellungen reduziert werden.

Insbesondere kann es zum Rücksetzen des Störlichtbogenschutzgeräts vorteilhaft sein, wenn das Bedienelement für eine vorgegebene Zeitdauer in der Mittelstellung zu halten ist. Dies allein kann zum Auslösen eines Rücksetzvorgangs ausreichend sein. Das Halten bzw. Verweilen des Bedienelements in der Mittelstellung für eine gewisse Zeitdauer kann aber mit anderen Bedienaktionen kombiniert werden, um einen Rücksetzbefehl zu kodieren.

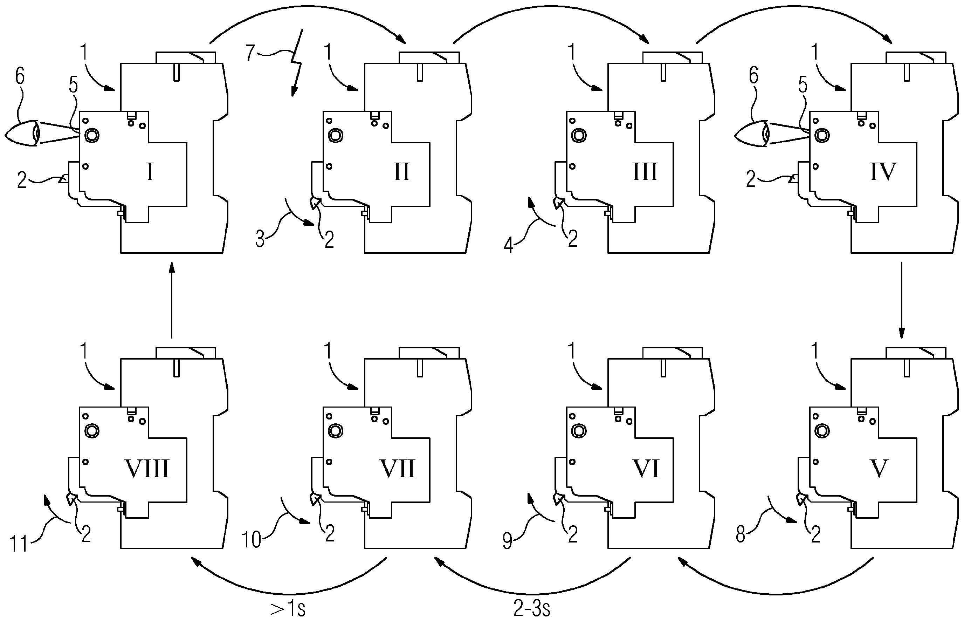

Die vorliegende Erfindung wird nun anhand der beigefügten Figur näher erläutert, die einen Schaltzyklus eines Störlichtbogenschutzgeräts beim Auftreten eines Störlichtbogens und zum Rücksetzen des Störlichtbogenschutzgeräts zeigt.

Die nachfolgend näher geschilderten Ausführungsbeispiele stellen bevorzugte Ausführungsformen der vorliegenden Erfindung dar.

In dem Beispiel der Figur ist ein Störlichtbogenschutzgerät 1 in acht verschiedenen Zuständen jeweils in der Seitenansicht dargestellt. In dieser Ansicht sind die Anschlüsse nicht zu erkennen. Mit diesen Anschlüssen ist das Störlichtbogenschutzgerät 1 in eine elektrische Leitung eines Niedervolt-Systems schaltbar. Es kann auch mehrere Anschlüsse zur Überwachung mehrerer Leitungen aufweisen.

Das Störlichtbogenschutzgerät 1 besitzt einen Schalter bzw. Bedienhebel 2, mit dem es ein- und ausgeschaltet werden kann. Der Bedienhebel 2 ist hier schwenkbar, was beispielsweise die Pfeile 3 und 4 andeuten.

Anstelle des Bedienhebels 2 kann das Störlichtbogenschutzgerät auch eine andere Bedieneinrichtung aufweisen. Beispielsweise könnte ein Druckschalter oder dergleichen vorgesehen sein.

Außerdem besitzt das Störlichtbogenschutzgerät 1 eine Anzeigeeinrichtung 5, die einem Benutzer 6 anzeigt, in welchem Zustand sich das Gerät befindet. Die Anzeigeeinrichtung kann beispielsweise durch eine LED realisiert sein. Sie zeigt dann an, ob sich das Störlichtbogenschutzgerät in einem Störungszustand oder einem Betriebszustand befindet. In einem Störungszustand befindet sich das Gerät, wenn durch eine interne, in der Figur nicht dargestellte Detektionseinrichtung ein Störlichtbogen detektiert wurde. In dem Störungszustand sind dann beispielsweise die Kontakte einer Leitung, die im Betriebszustand kurzgeschlossen sind, elektrisch voneinander getrennt.

Befindet sich der Bedienhebel in der Aus-Stellung, so ist die Lastseite des Schaltkreises nicht versorgt, und die Elektronik des Störlichtbogenschutzgeräts ist nicht aktiv. Durch Umlegen des Bedienhebels in die Ein-Stellung wird die Elektronik des Störlichtbogenschutzgeräts aktiviert.

Im eingeschalteten Zustand (Ein-Stellung des Bedienhebels 2) kann sich das Störlichtbogenschutzgerät sowohl im Störungszustand als auch im normalen Betriebszustand befinden. Dies hängt davon ab, ob in der Vergangenheit ein Störlichtbogen detektiert wurde oder nicht, bzw. ob das Gerät nach einem Störlichtbogenereignis zurückgesetzt wurde.

Im ausgeschalteten Zustand sind die Hauptkontakte des Störlichtbogenschutzgeräts unabhängig von einer zuvor aufgetretenen Störung auf alle Fälle offen.

Zum Rücksetzen des Störlichtbogenschutzgeräts vom Störungszustand in den normalen Betriebszustand besitzt das Gerät hier kein separates Bedienelement. Vielmehr wird zum Rücksetzen hier auch der Ein-Aus-Schalter, hier der Bedienhebel 2, benutzt. Um dies realisieren zu können ist beispielsweise die Firmware des Störlichtbogenschutzgeräts so programmiert, dass mit ihr und ggf. entsprechender Sensorik eine spezifische Kombination von Betätigungsaktionen der Bedieneinrichtung bzw. des Bedienhebels 2 erkannt werden kann.

Ein Beispiel für eine derartige Bedienkombination bzw. Bedienabfolge der manuellen Bedienung des Bedienhebels 2 ist in der Figur dargestellt. Konkret ist das Störlichtbogenschutzgerät in acht verschiedenen Zuständen I bis VIII dargestellt.

In dem Zustand I befindet sich das Störlichtbogenschutzgerät in einem normalen eingeschalteten Betriebszustand. Die Anzeigeeinrichtung 5 zeigt "keinen Störfall" an.

Tritt nun ein Lichtbogen 7 auf, wird dies von der geräteinternen Detektionseinrichtung registriert und sie schaltet das Gerät automatisch in den Störungszustand. Dabei wird das Gerät ausgeschaltet und der Bedienhebel 2 schwenkt nach unten, was mit Pfeil 3 angedeutet ist.

Wenn nun ein Elektriker das Störlichtbogenschutzgerät 1 wieder einschaltet (Zustand III) bewegt er gemäß Pfeil 4 den Bedienhebel 2 nach oben. Im eingeschalteten Zustand (Zustand IV) zeigt die Anzeigeeinrichtung 5 dem Benutzer 6 den Störungszustand an. Daraufhin schaltet der Elektriker das Störlichtbogenschutzgerät 1 wieder aus (Zustand V). Hierbei bewegt er den Bedienhebel 2 gemäß Pfeil 8 nach unten. Anschließend behebt er die Störung.

Nach behobener Störung muss das Störlichtbogenschutzgerät 1 wieder vom Störungszustand in den normalen Betriebszustand gebracht werden. Dies erfolgt durch ein Rücksetzen des Geräts (Zustände VI bis VIII). Im vorliegenden Beispiel schaltet der Elektriker das Gerät durch Hochschwenken des Bedienhebels 2 gemäß Pfeil 9 ein. Er wartet dann zwei bis drei Sekunden, bis er das Gerät entsprechend Pfeil 10 wieder abschaltet (Zustand VII). Nun wartet er im ausgeschalteten Zustand des Geräts mindestens 1s, bis er das Gerät wieder gemäß Pfeil 11 einschaltet (Zustand VIII). Durch das Ausschalten (Zustand VII) in dem speziellen Zeitfenster von hier 2s bis 3s nach dem Einschalten (Zustand VI) und dem Einschalten (Zustand VIII) mehr als 1s nach dem Ausschalten (Zustand VII) wird das Gerät von dem Störungszustand in den Betriebszustand zurückgesetzt. Eine geräteinterne Rücksetzeinrichtung wertet hierfür die Bedienungsabfolge der Bedieneinrichtung bzw. des Bedienhebels 2 aus. Im Zustand VIII zeigt die Anzeigeeinrichtung 5 wieder den normalen Betriebszustand an.

Ein Störungszustand wird in einem Störungsspeicher des Störlichtbogenschutzgeräts gespeichert. Es wird hier ein nichtflüchtiger Speicher verwendet, der auch im ausgeschalteten Zustand des Geräts nicht gelöscht wird. Insbesondere empfiehlt sich hierfür ein digitaler Speicher wie ein so genannter "Flash" oder "ROM". Dieser ist meist ohnehin in einem Störlichtbogenschutzgerät, das einen DSP oder einen Mikrokontroller besitzt, enthalten.

Nachfolgend wird ein konkretes Lösungsbeispiel dargestellt. Nachdem die Störung durch den Elektriker behoben wurde (zwischen den Zuständen römisch V und VI), wird das Störlichtbogenschutzgerät I wieder eingeschaltet (Zustand VI). Die geräteinterne Elektronik wird aktiviert und ein Zähler startet. Wenn der Zähler einen ersten Schwellwert korrespondierend zu einer Zeitdauer von 2s erreicht, wird in dem Flash-Speicher ein Flag gesetzt. Wenn der Zähler einen zweiten Schwellwert entsprechend einer Zeitdauer von 3s erreicht, wird das gleiche Flag gelöscht. Das Flag deutet also an, ob das Zeitfenster zum Ausschalten des Geräts für den Rücksetzvorgang eingehalten wurde. Wenn das Gerät demnach zwischen den Zeitpunkten "2s nach dem Einschalten" und "3s nach dem Einschalten" ausgeschaltet wurde, bleibt das Flag gesetzt. Es ist auch dann noch gesetzt, wenn das Gerät wieder eingeschaltet wird (Zustand VIII). Durch das Ausschalten genau in dem vorgesehenen Zeitfenster und das erneute Einschalten wird der Zustand des Störlichtbogenschutzgeräts vom Störungszustand in den Betriebszustand zurückgesetzt. In diesem Fall wird also der Störungsspeicher gelöscht und an der Anzeigeeinrichtung wird keine Störung mehr angezeigt.

Wenn hingegen das Gerät vor Ablauf der 2s nach dem Einschalten oder nach 3s nach dem Einschalten ausgeschaltet wird, wird das Flag gelöscht, sobald das Gerät wieder eingeschaltet wird. In diesem Fall wird der Störungsspeicher nicht gelöscht, und der Störungszustand wird angezeigt.

Wird das speziell definierte Zeitfenster zum Ausschalten versäumt, muss der Rücksetzversuch erneut gestartet werden. Um derartige Wiederholungen möglichst zu vermeiden, kann das Zeitfenster größer definiert werden. Darüber hinaus kann auch ein zusätzliches Signal auf der Anzeigeeinrichtung (z. B. ein kurzes Blinken) andeuten, dass der Benutzer das definierte Zeitfenster zum Löschen des Störungsspeichers betritt oder verlässt.

Gemäß einer weiteren Ausführungsform kann eine spezielle Bedieneinrichtung verwendet werden. Anstelle eines Bedienhebels mit nur zwei Zuständen (Ein-Aus-Stellungen) kann ein spezieller Bedienmechanismus mit drei Zuständen einschließlich einer Mittelstellung zwischen einer Einstellung und einer Ausstellung vorgesehen sein. Der Benutzer muss dann beispielsweise den Bedienhebel während einer vorgegebenen Zeitdauer in der Mittelstellung halten, um den Störungsspeicher zurückzusetzen.

Die obigen Realisierungsbeispiele sind rein exemplarisch. Es können auch andere Kombinationen von Schaltstellungen und Zeitspannen vorgesehen sein. Damit sind unterschiedlichste Bedienabfolgen realisierbar, um einen Befehl zum Rücksetzen zu kodieren.

Die Zeit wird in dem Störlichtbogenschutzgerät beispielsweise mittels eines Hardware-Zählers gemessen. Zur Zeitmessung können aber auch RAM-Variable, Interrupts und PWM-Signale verwendet werden.

Als Störungsspeicher ist hier ein interner Flash- oder ROM-Speicher genannt. Es können aber auch externe Speicherkomponenten wie beispielsweise Magnetspeicher (z. B. Festplatte, Spule) elektrische Speicher (Kondensator) oder mechanische Systeme verwendet werden, um die Störungsinformationen zu speichern.

### Bezugszeichenliste

- 1: Störlichtbogenschutzgerät
- 2: Bedieneinrichtung
- 3, 4: Pfeil
- 5: Anzeigeeinrichtung
- 6: Benutzer
- 7: Störlichtbogen
- 8, 9, 10: Pfeil
- I, VIII: Betriebszustand
- II - VII: Störungszustand

## Patentansprüche

1. Störlichtbogenschutzgerät (1) mit
- zwei Kontakten, die in einem Störungszustand (II bis VII) elektrisch voneinander getrennt und in einem Betriebszustand (I, VIII) elektrisch kurzgeschlossen sind,
- einer Detektionseinrichtung zum Detektieren eines Störlichtbogens (7) und zum automatischen Versetzen des Störlichtbogenschutzgeräts (1) von dem Betriebszustand (I, VIII) in den Störungszustand (II bis VII), wenn der Störlichtbogen (7) detektiert ist,
- einer Bedieneinrichtung (2) zum manuellen Einschalten und Ausschalten des Störlichtbogenschutzgeräts (1),
- eine Rücksetzeinrichtung zum Erfassen einer zeitlichen Bedienungsabfolge einer manuellen Bedienung der Bedienungseinrichtung (2) und zum Rücksetzen des Störlichtbogenschutzgeräts von dem Störungszustand in den Betriebszustand in Abhängigkeit von der erfassten Bedienungsabfolge, **dadurch gekennzeichnet, dass**
- das Störlichtbogenschutzgerät (1) durch eine zweite Bedienungsabfolge rücksetzbar ist, welche durch ein Einschalten (Zustand VI), ein Ausschalten (Zustand VII) in einem vorgegebenen Zeitfenster nach dem Einschalten und einem anschließenden erneuten Einschalten (Zustand VIII) jeweils durch die Bedienungseinrichtung (2) charakterisiert ist.

2. Störlichtbogenschutzgerät nach Anspruch 1, das eine Anzeigeeinrichtung (5) zum Anzeigen, ob sich das Störlichtbogenschutzgerät im Störungszustand (II bis VII) oder im Betriebszustand (I, VIII) befindet, aufweist.

3. Störlichtbogenschutzgerät nach einem der vorhergehenden Ansprüche, wobei die Detektionseinrichtung einen nicht-flüchtigen Speicher aufweist, mit dem gewährleistet ist, dass sich das Störlichtbogenschutzgerät im Störungszustand (II bis VII) nach einer ersten Bedienungsabfolge, die durch ein einziges Ausschalten, bei der das Störlichtbogenschutzgerät (1) automatisch von dem Betriebszustand (I, VIII) in den Störungszustand (II bis VII) versetzt wurde, und ein einziges Wiedereinschalten charakterisiert ist, nach wie vor im Störungszustand befindet.

4. Störlichtbogenschutzgerät nach einem der vorhergehenden Ansprüche, wobei das vorgegebene Zeitfenster zwischen 2s und 3s nach dem Einschalten liegt.

5. Störlichtbogenschutzgerät nach einem der vorhergehenden Ansprüche, wobei das erneute Einschalten mindestens 1s nach dem Ausschalten liegt.

6. Störlichtbogenschutzgerät nach Anspruch 2, wobei mit der Anzeigeeinrichtung (5) das Zeitfenster anzeigbar ist.

7. Störlichtbogenschutzgerät nach Anspruch 3, wobei in dem nicht-flüchtigen Speicher ein Flag gesetzt wird, wenn das Ausschalten in dem Zeitfenster erfolgt, und das Flag beim erneuten Einschalten von der Rücksetzeinrichtung verarbeitet wird.

8. Störlichtbogenschutzgerät nach einem der Ansprüche 1 bis 3, wobei die Bedieneinrichtung (2) ein Bedienelement aufweist, das zum Einschalten in eine erste Stellung, zum Ausschalten in eine zweite Stellung und zum Realisieren einer Bedienungsabfolge für das Rücksetzen des Störlichtbogenschutzgeräts auch in eine definierte Mittelstellung zwischen der ersten und der zweiten Stellung bewegbar ist.

9. Störlichtbogenschutzgerät nach Anspruch 8, wobei das Bedienelement zum Rücksetzen des Störlichtbogenschutzgeräts für eine vorgegebene Zeitdauer in der Mittelstellung zu halten ist.

10. Verfahren zum Rücksetzen eines Störlichtbogenschutzgeräts (1) durch
- Detektieren eines Störlichtbogens (7) durch das Störlichtbogenschutzgerät (1) mit zwei Kontakten, die in einem Störungszustand (II bis VII) elektrisch voneinander getrennt und in einem Betriebszustand (I, VIII) elektrisch kurzgeschlossen sind,
- automatischen Versetzen des Störlichtbogenschutzgeräts (1) von einem Betriebszustand (I, VIII) in einen Störungszustand (II bis VII), wenn ein Störlichtbogen (7) detektiert wird, und
- manuelles Einschalten und Ausschalten des Störlichtbogenschutzgeräts (1),
- Erfassen einer zeitlichen Bedienungsabfolge einer manuellen Bedienung des Störlichtbogenschutzgeräts (1) und
- Rücksetzen des Störlichtbogenschutzgeräts (1) von dem Störungszustand (II bis VII) in den Betriebszustand (I, VIII) in Abhängigkeit von der erfassten Bedienungsabfolge, **dadurch gekennzeichnet, dass**
- das Störlichtbogenschutzgerät (1) durch eine zweite Bedienungsabfolge rücksetzbar ist, welche durch ein Einschalten (Zustand VI), ein Ausschalten (Zustand VII) in einem vorgegebenen Zeitfenster nach dem Einschalten und einem anschließenden erneuten Einschalten (Zustand VIII) jeweils durch die Bedienungseinrichtung (2) charakterisiert ist.

## Claims

1. Arc fault protection device (1) having
- two contacts which are electrically isolated from one another in a fault state (II to VII) and are electrically short-circuited in an operating state (I, VIII),
- a detection device for detecting an arc fault (7) and for automatically changing the arc fault protection device (1) from the operating state (I, VIII) to the fault state (II to VII) if the arc fault (7) is detected,
- an operating device (2) for manually switching the arc fault protection device (1) on and off,
- a resetting device for capturing a temporal operating sequence of manual operation of the operating device (2) and for resetting the arc fault protection device from the fault state to the operating state on the basis of the captured operating sequence,
**characterized in that**
- the arc fault protection device (1) can be reset by means of a second operating sequence which is **characterized by** a switching-on operation (state VI), a switching-off operation (state VII) in a predefined time window after the switching-on operation and a subsequent renewed switching-on operation (state VIII), in each case by the operating device (2).

2. Arc fault protection device according to Claim 1, which has a display device (5) for displaying whether the arc fault protection device is in the fault state (II to VII) or in the operating state (I, VIII).

3. Arc fault protection device according to one of the preceding claims, wherein the detection device has a non-volatile memory which is used to ensure that the arc fault protection device in the fault state (II to VII) is still in the fault state after a first operating sequence which is **characterized by** a single switching-off operation, in which the arc fault protection device (1) was automatically changed from the operating state (I, VIII) to the fault state (II to VII), and a single switching-on operation again.

4. Arc fault protection device according to one of the preceding claims, wherein the predefined time window is between 2 s and 3 s after the switching-on operation.

5. Arc fault protection device according to one of the preceding claims, wherein the renewed switching-on operation is at least 1 s after the switching-off operation.

6. Arc fault protection device according to Claim 2, wherein the time window can be displayed using the display device (5).

7. Arc fault protection device according to Claim 3, wherein a flag is set in the non-volatile memory if the switching-off operation is carried out in the time window, and the flag is processed by the resetting device during the renewed switching-on operation.

8. Arc fault protection device according to one of Claims 1 to 3, wherein the operating device (2) has an operating element which can be moved into a first position for the switching-on operation, can be moved into a second position for the switching-off operation and can also be moved into a defined middle position between the first and second positions for implementing an operating sequence for resetting the arc fault protection device.

9. Arc fault protection device according to Claim 8, wherein the operating element should be held in the middle position for a predefined period in order to reset the arc fault protection device.

10. Method for resetting an arc fault protection device (1) by
- detecting an arc fault (7) by means of the arc fault protection device (1) having two contacts which are electrically isolated from one another in a fault state (II to VII) and are electrically short-circuited in an operating state (I, VIII),
- automatically changing the arc fault protection device (1) from an operating state (I, VIII) to a fault state (II to VII) if an arc fault (7) is detected, and
- manually switching the arc fault protection device (1) on and off,
- capturing a temporal operating sequence of manual operation of the arc fault protection device (1), and
- resetting the arc fault protection device (1) from the fault state (II to VII) to the operating state (I, VIII) on the basis of the captured operating sequence,
**characterized in that**
- the arc fault protection device (1) can be reset by means of a second operating sequence which is **characterized by** a switching-on operation (state VI), a switching-off operation (state VII) in a predefined time window after the switching-on operation and a subsequent renewed switching-on operation (state VIII), in each case by the operating device (2).

## Revendications

1. Appareil de protection contre les arcs de défaut (1) comprenant
- deux contacts, électriquement séparés l'un de l'autre dans un état de défaut (II à VII) et électriquement court-circuités dans un état de marche (I, VIII),
- un dispositif de détection pour la détection d'un arc de défaut (7) et pour le passage automatique de l'appareil de protection contre les arcs de défaut (1) de l'état de marche (I, VIII) dans l'état de défaut (II à VII), quand l'arc de défaut (7) est détecté,
- un dispositif de commande (2) pour la mise sous tension et la mise hors tension manuelles de l'appareil de protection contre les arcs de défaut (1),
- un dispositif de réinitialisation pour la saisie d'une suite de commandes dans le temps d'une commande manuelle du dispositif de commande (2) et pour la réinitialisation de l'appareil de protection contre les arcs de défaut de l'état de défaut dans l'état de marche en fonction de la suite de commandes saisie,
**caractérisé en ce que**
- l'appareil de protection contre les arcs de défaut (1) peut être réinitialisé par une deuxième suite de commandes, laquelle est **caractérisée par** une mise sous tension (état VI), une mise hors tension (état VII) dans un créneau temporel prédéfini après la mise sous tension et une nouvelle mise sous tension consécutive (état VIII) à chaque fois par le dispositif de commande (2).

2. Appareil de protection contre les arcs de défaut selon la revendication 1 comprenant un dispositif de signalisation (5) signalant si l'appareil de protection contre les arcs de défaut se trouve dans l'état de défaut (II à VII) ou dans l'état de marche (I, VIII).

3. Appareil de protection contre les arcs de défaut selon l'une des revendications précédentes, dans lequel le dispositif de détection comprend une mémoire non volatile qui garantit que l'appareil de protection contre les arcs de défaut dans l'état de défaut (II à VII), après une première suite de commandes, **caractérisée par** une mise hors tension unique, lors de laquelle l'appareil de protection contre les arcs de défaut (1) passe automatiquement de l'état de marche (I, VIII) dans l'état de défaut (II à VII) et par une remise sous tension unique, se trouve comme auparavant dans l'état de défaut.

4. Appareil de protection contre les arcs de défaut selon l'une des revendications précédentes, dans lequel le créneau temporel prédéfini se trouve entre 2 s et 3 s après la mise sous tension.

5. Appareil de protection contre les arcs de défaut selon l'une des revendications précédentes, dans lequel la nouvelle mise sous tension a lieu au moins 1 s après la mise hors tension.

6. Appareil de protection contre les arcs de défaut selon la revendication 2, dans lequel le créneau temporel est visible grâce au dispositif de signalisation (5).

7. Appareil de protection contre les arcs de défaut selon la revendication 3, dans lequel, un drapeau apparaît dans la mémoire non volatile quand la mise hors tension se produit dans le créneau temporel et le drapeau est traité par le dispositif de réinitialisation lors d'une nouvelle mise sous tension.

8. Appareil de protection contre les arcs de défaut selon l'une des revendications 1 à 3, dans lequel le dispositif de commande (2) comprend un élément de commande qu'on peut déplacer pour la mise sous tension dans une première position, pour la mise hors tension dans une deuxième position et pour la réalisation d'un suite de commandes destinée à la réinitialisation de l'appareil de protection contre les arcs de défaut, également dans une position intermédiaire définie entre la première et la deuxième position.

9. Appareil de protection contre les arcs de défaut selon la revendication 8, dans lequel l'élément de commande pour la réinitialisation de l'appareil de protection contre les arcs de défaut, doit être maintenu dans la position intermédiaire pendant une durée prédéfinie.

10. Procédé de réinitialisation d'un appareil de protection contre les arcs de défaut (1) par
- détection d'un arc de défaut (7) par l'appareil de protection contre les arcs de défaut (1) présentant deux contacts séparés électriquement l'un de l'autre dans un état de défaut (II à VII) et électriquement court-circuités dans l'état de marche (I, VIII),
- passage automatique de l'appareil de protection contre les arcs de défaut (1) d'un état de marche (I, VIII) dans un état de défaut (II à VII) quand un arc de défaut (7) est détecté, et
- mise sous tension et mise hors tension manuelles de l'appareil de protection contre les arcs de défaut (1),
- saisie d'une suite de commandes dans le temps d'une commande manuelle de l'appareil de protection contre les arcs de défaut (1) et
- réinitialisation de l'appareil de protection contre les arcs de défaut (1) de l'état de défaut (II à VII) dans l'état de marche (I, VIII) en fonction de la suite de commandes saisie, **caractérisé en ce que**
- l'appareil de protection contre les arcs de défaut (1) peut être réinitialisé par une deuxième suite de commandes qui est **caractérisée par** une mise sous tension (état VI), une mise hors tension (état VII) dans un créneau temporel prédéfini après la mise sous tension et une nouvelle mise sous tension (état VIII) consécutive à chaque fois par le dispositif de commande (2).
